# EUROPÄISCHE PATENTSCHRIFT

(11) **EP 3 942 189 B1**
(45) Veröffentlichungstag und Bekanntmachung des Hinweises auf die Patenterteilung: **07.06.2023**
(21) Anmeldenummer: 20718127.2
(22) Anmeldetag: 04.03.2020
(51) Int. Cl.: F16C 17/03

(54) **GLEITLAGERUNG**
PLAIN BEARING ARRANGEMENT
PALIER DE GLISSEMENT

(30) Priorität: 07.03.2019 AT 501822019
(43) Veröffentlichungstag der Anmeldung: 26.01.2022
(73) Patentinhaber: Miba Gleitlager Austria GmbH, 4663 Laakirchen (AT)
(72) Erfinder: HÖLZL, Johannes, 4880 Berg im Attergau (AT); HERBST, Klaus, 4802 Ebensee (AT); CIKLAMINI, Marek, 4810 Gmunden (AT); WALDL, Albert, 4663 Laakirchen (AT); HOLZINGER, Martin, 4644 Scharnstein (AT)
(74) Vertreter: Burger, Hannes
(86) Internationale Anmeldenummer: PCT/AT2020/060063
(87) Internationale Veröffentlichungsnummer: WO 2020/176918

(56) Entgegenhaltungen:
- AT-A1- 509 625
- DE-A1- 1 625 538
- DE-C- 531 749
- DE-C- 678 930
- US-A- 2 276 143
- US-A- 2 898 164

## Beschreibung

Die Erfindung betrifft eine Gleitlagerung, sowie eine mit der Gleitlagerung ausgestatteten Gondel für eine Windkraftanlage, eine Windkraftanlage, sowie ein Verfahren zum Wechsel von Gleitlagerpads in der Gleitlagerung. Weiters betrifft die Erfindung ein Verfahren zum Herstellen eines inneren Ringelementes für eine Gleitlagerung.

Aus der WO 2011/127510 A1 ist ein Lagerelement für die Lagerung der Rotornabe einer Windkraftanlage bekannt.

Die DE 678930 C offenbart ein Lager mit mehreren Gleitstücken oder -blöcken zwischen dem feststehenden und dem drehbaren Lagerteil, deren als Drehflächen ausgebildete Lagerflächen zusammen mit einer eine ununterbrochene Drehfläche darstellenden Lagerfläche keilförmige Schmiermitteltaschen bilden. Weiters ist ein mit einem Innengewinde versehenes Halteglied ausgebildet, welches zur axialen Fixierung der einzelnen Gleitstücke dient.

Aufgabe der vorliegenden Erfindung war es, eine verbesserte Gleitlagerung zur Verfügung zu stellen.

Diese Aufgabe wird durch eine Vorrichtung und ein Verfahren gemäß den Ansprüchen gelöst.

Erfindungsgemäß ist eine Gleitlagerung vorgesehen. Die Gleitlagerung umfasst:
- ein inneres Ringelement;
- ein äußeres Ringelement;
- zumindest ein Gleitlagerelement, welches zwischen dem inneren Ringelement und dem äu-ßeren Ringelement angeordnet ist.

Das Gleitlagerelement weist mehrere Gleitlagerpads auf, wobei die einzelnen Gleitlagerpads jeweils eine Radiallagerfläche und ein der Radiallagerfläche gegenüberliegendes Befestigungsprofil aufweisen. Das innere Ringelement weist an dessen radialer Außenseite zumindest ein Aufnahmeprofil auf, welches zur formschlüssigen Verbindung der Gleitlagerpads mit dem inneren Ringelement dient.

Die erfindungsgemäße Gleitlagerung weist den Vorteil auf, dass die einzelnen Gleitlagerpads einfach mit dem inneren Ringelement verbunden werden können und somit eine einfache Montage bzw. ein einfacher Austausch der einzelnen Gleitlagerpads erreicht werden kann. Weiters kann es zweckmäßig sein, wenn das Befestigungsprofil des Gleitlagerpads und das Aufnahmeprofil des inneren Ringelements derart ausgebildet sind, dass das Gleitlagerpad in Axialrichtung in das innere Ringelement einschiebbar ist. Durch diese Maßnahme kann eine einfache Austauschbarkeit des Gleitlagerpads erreicht werden und gleichzeitig im betriebsbereiten Zustand der Gleitlagerung ein fester Sitz der Gleitlagerpads erreicht werden.

Ferner kann vorgesehen sein, dass das Befestigungsprofil und das Aufnahmeprofil als Schwalbenschwanzverbindung ausgebildet sind. Durch diese Maßnahme kann eine einfache Austauschbarkeit des Gleitlagerpads erreicht werden und gleichzeitig im betriebsbereiten Zustand der Gleitlagerung ein fester Sitz der Gleitlagerpads erreicht werden.

Es ist vorgesehen, dass am inneren Ringelement im Bereich des Aufnahmeprofils ein Axialanschlag für das Gleitlagerpad ausgebildet ist. Durch diese Maßnahme kann zusätzlich eine axiale Positionierung des Gleitlagerpads erreicht werden.

Es ist vorgesehen, dass am inneren Ringelement im Bereich des Aufnahmeprofils ein lösbares Axialklemmelement für das Gleitlagerpad ausgebildet ist, wobei eine erste Stirnfläche des Gleitlagerpads in Axialrichtung an den Axialanschlag anlegbar ist und das Axialklemmelement auf eine zweite Stirnfläche des Gleitlagerpads einwirkbar ist. Durch diese Maßnahme kann das Gleitlagerpad in Axialrichtung fixiert werden.

Gemäß einer Weiterbildung ist es möglich, dass zwischen dem Befestigungsprofil des Gleitlagerpads und dem Aufnahmeprofil des inneren Ringelements eine Klemmvorrichtung angeordnet ist, mittels welcher das Gleitlagerpad klemmbar ist. Durch diese Maßnahmen kann das Gleitlagerpad ausreichend fest am inneren Ringelement befestigt werden, sodass es im Betrieb zu keinen Schwingungen des Gleitlagerpads oder keiner Verschiebung des Gleitlagerpads kommt.

Ferner kann es zweckmäßig sein, wenn die Klemmvorrichtung zumindest einen ersten Klemmkeil umfasst, welcher eine Keilfläche aufweist, die mit einer im Aufnahmeprofil ausgebildeten und sich in Axialrichtung verjüngenden ersten Gegenkeilfläche zusammenwirkt, wobei der erste Klemmkeil mittels einem ersten Positioniermittel, insbesondere einem Gewindeelement, in Axialrichtung verschiebbar ist. Besonders ein derart ausgebildeter Klemmkeil eignet sich überraschend gut zum Herstellen einer Verbindung, welche hohe Kräfte übertragen kann und welche einfach wieder gelöst werden kann.

Darüber hinaus kann vorgesehen sein, dass die Klemmvorrichtung einen zweiten Klemmkeil umfasst, welcher eine Keilfläche aufweist, die mit einer im Aufnahmeprofil ausgebildeten und sich in Axialrichtung verjüngenden zweiten Gegenkeilfläche zusammenwirkt, wobei die erste Gegenkeilfläche und die zweite Gegenkeilfläche entgegengesetzt verjüngend ausgebildet sind, wobei der zweite Klemmkeil mittels eines zweiten Positioniermittels, insbesondere eines Gewindeelementes, in Axialrichtung verschiebbar ist. Durch diese Maßnahmen kann eine symmetrische Klemmung des Gleitlagerpads erreicht werden.

Weiters kann vorgesehen sein, dass das erste Positioniermittel und das zweite Positioniermittel an einer gemeinsamen Positionierstange ausgebildet sind, wobei das erste Positioniermittel ein Rechtsgewinde und das zweite Positioniermittel ein Linksgewinde aufweist. Dies bringt den Vorteil mit sich, dass durch Verdrehen der gemeinsamen Positionierstange beide Klemmkeile geöffnet bzw. geschlossen werden können. Für diese Funktion ist nur wesentlich, dass am ersten Positioniermittel und am zweiten Positioniermittel ein gegensinniges Gewinde ausgebildet ist. Für den alltäglichen Gebrauch macht es in der beschriebenen Konfiguration jedoch Sinn, dass das erste Positioniermittel ein Rechtsgewinde ist, sodass durch Drehen im Uhrzeigersinn die Klemmung geschlossen werden kann und durch Drehen gegen den Uhrzeigersinn die Klemmung geöffnet werden kann.

Gemäß einer besonderen Ausprägung ist es möglich, dass am Gleitlagerpad zumindest eine erste Axiallagerfläche ausgebildet ist, welche im Längsschnitt gesehen in einem ersten Winkel von 90° zur Radiallagerfläche angeordnet ist, insbesondere dass am Gleitlagerpad auch eine zweite Axiallagerfläche ausgebildet ist, welche in einem zweiten Winkel von 90° zur Radiallagerfläche angeordnet ist und welche der ersten Axiallagerfläche gegenüberliegend angeordnet ist. Durch diese Maßnahme kann mittels der Gleitlagerpads nicht nur eine radiale Lagerung sondern zusätzlich auch eine axiale Lagerung des inneren Ringelementes am äußeren Ringelement erreicht werden.

Entsprechend einer vorteilhaften Weiterbildung kann vorgesehen sein, dass das innere Ringelement mehrere Kippsegmente aufweist, welche über den Umfang verteilt angeordnet sind, wobei die einzelnen Kippsegmente in Umfangsrichtung beabstandet zueinander angeordnet sind und unabhängig voneinander verkippbar sind, wobei je Kippsegment zumindest eines der Aufnahmeprofile ausgebildet ist. Dies bringt den Vorteil mit sich, dass etwaige Fertigungstoleranzen bzw. auch etwaige Verformungen der Welle durch die Kippsegmente ausgeglichen werden können, sodass erreicht werden kann, dass die Radiallagerfläche zu jeder Zeit vollflächig an der Gegenfläche anliegt und es somit nicht zu übermäßig hohen Flächenbelastungen kommt.

Insbesondere kann es vorteilhaft sein, wenn die einzelnen Kippsegmente in Axialrichtung gesehen zumindest an einer ersten Stirnseite eine erste Ausnehmung aufweisen, insbesondere dass die einzelnen Kippsegmente in Axialrichtung gesehen an einer zweiten Stirnseite eine zweite Ausnehmung aufweisen, insbesondere dass die einzelnen Kippsegmente im Querschnitt gesehen Z-Förmig ausgebildet sind. Durch einen derartigen Aufbau kann eine gute Funktionalität der einzelnen Kippsegmente erreicht werden. Insbesondere die Verkippbarkeit der einzelnen Kippsegmente kann durch einen derartigen Aufbau erleichtert werden.

Ferner kann vorgesehen sein, dass das äußere Ringelement hülsenförmig ausgebildet ist, wobei an einer ersten Stirnseite eine radial nach innen vorstehende erste Stirnwand ausgebildet ist und dass eine erste Axiallagerfläche des Gleitlagerpads an der ersten Stirnwand anliegt. Durch diese Maßnahme kann ein einfacher Einbau bzw. ein einfacher Austausch der einzelnen Gleitlagerpads erreicht werden.

Weiters kann vorgesehen sein, dass die erste Stirnwand und somit auch die erste Axiallagerfläche in einem Winkel von 90° zur zentralen Mittelachse angeordnet ist.

Außerdem kann vorgesehen sein, dass die Radiallagerfläche eine konische Form aufweist.

Insbesondere kann vorgesehen sein, dass die erste Axiallagerfläche und die Radiallagerfläche im Querschnitt gesehen V-förmig zueinander angeordnet sind. Die Radiallagerfläche kann somit ebenfalls zur Aufnahme von Axiallagerkräften dienen.

Weiters kann vorgesehen sein, dass die Radiallagerfläche eine konische Form aufweist und dass in gespiegelter Ausführung ein zweites inneres Ringelement mit ebenfalls daran angeordneten Gleitlagerpads ausgebildet ist. Bei einer derartigen Ausführungsvariante können die Radiallagerflächen der beiden gespiegelt angeordneten Gleitlagerpads V-förmig zueinander angeordnet sein. Durch eine derartige Ausführungsvariante können von der Gleitlagerung sowohl Radiallagerkräfte, als auch Axiallagerkräfte aufgenommen werden.

Ferner kann vorgesehen sein, dass das äußere Ringelement hülsenförmig ausgebildet ist, wobei an einer ersten Stirnseite eine radial nach innen vorstehende erste Stirnwand ausgebildet ist und an einer zweiten Stirnseite eine radial nach innen vorstehende zweite Stirnwand ausgebildet ist, wobei in zumindest einer der Stirnwände des äußeren Ringelementes eine Öffnung ausgebildet ist, welche zum Gleitlagerpadwechsel dient und welche mittels einem Deckel verschlossen ist, wobei der Deckel mittels Befestigungsmittel lösbar am äußeren Ringelement befestigt ist. Durch diese Maßnahme kann ein einfacher Einbau bzw. ein einfacher Austausch der einzelnen Gleitlagerpads erreicht werden.

Weiters kann vorgesehen sein, dass das äußere Ringelement einteilig ausgebildet ist, insbesondere dass die Gegenfläche als unterbrechungsfreie Fläche ausgebildet ist.

Weiters kann vorgesehen sein, dass die erste Stirnwandinnenfläche und die zweite Stirnwandinnenfläche des äußeren Ringelementes in einem Axialabstand zueinander angeordnet sind und dass die erste Axiallagerfläche und die zweite Axiallagerfläche des Gleitlagerpads in einem Axialabstand zueinander angeordnet sind, wobei der Axialabstand zwischen den beiden Stirnwandinnenflächen größer ist, als der Axialabstand zwischen den beiden Axiallagerflächen.

Erfindungsgemäß ist eine Gondel für eine Windkraftanlage vorgesehen. Die Gondel umfasst:
- ein Gondelgehäuse;
- eine Rotornabe;
- eine Rotorlagerung zur Lagerung der Rotornabe am Gondelgehäuse.
Die Rotorlagerung umfasst eine Gleitlagerung nach einem der vorhergehenden Ansprüche.

Besonders bei erfindungsgemäßen Gondeln führt die erfindungsgemäße Gleitlagerung zu einer einfachen Wartbarkeit der Gleitlagerung.

Erfindungsgemäß ist darüber hinaus eine Windkraftanlage mit obig beschriebenen Gondel vorgesehen.

Erfindungsgemäß ist ein Verfahren zum Wechsel von Gleitlagerpads in einer obig beschriebenen Gleitlagerung vorgesehen. Das Verfahren weist folgende Verfahrensschritte auf:
- Entfernen eines der Gleitlagerpads durch axiales Herausziehen des Befestigungsprofils des betreffenden Gleitlagerpads aus dem Aufnahmeprofil des inneren Ringelementes;
- Einsetzen eines neuen Gleitlagerpads durch axiales Einschieben des Befestigungsprofils des betreffenden Gleitlagerpads in das Aufnahmeprofil des inneren Ringelementes.

Erfindungsgemäß ist ein Verfahren zum Herstellen eines inneren Ringelementes für eine Gleitlagerung vorgesehen. Das Verfahren umfasst die Verfahrensschritte:
- Vorschmieden eines Innenringrohlings zur groben Formung einer Rohlingkontur;
- Normalglühen des Innenringrohlings;
- Herstellen des Aufnahmeprofils durch Bearbeiten des Innenringrohlings mittels zerspanender Bearbeitung.

Der Innenringrohling kann aus einem Vergütungsstahl nach DIN EN 10083 gefertigt sein. Insbesondere kann als Werkstoff für den Innenringrohling 42CrMo4 verwendet werden.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer Windkraftanlage;
- Fig. 2: eine perspektivische Ansicht eines Ausführungsbeispiels einer Gleitlagerung;
- Fig. 3: eine perspektivische Schnittdarstellung der Gleitlagerung;
- Fig. 4: eine erste perspektivische Ansicht eines Ausführungsbeispiels eines Gleitlagerpads;
- Fig. 5: eine zweite perspektivische Ansicht des Ausführungsbeispiels des Gleitlagerpads;
- Fig. 6: eine perspektivische Ansicht eines Ausführungsbeispiels eines inneren Ringelementes;
- Fig. 7: eine perspektivische Ansicht des inneren Ringelementes mit daran angeordneten Gleitlagerpads;
- Fig. 8: eine Querschnittdarstellung des inneren Ringelementes;
- Fig. 9: eine Querschnittdarstellung eines Innenringrohlings;
- Fig. 10: eine perspektivische Schnittdarstellung eines zweiten Ausführungsbeispiels der Gleitlagerung;
- Fig. 11: eine perspektivische Schnittdarstellung eines dritten Ausführungsbeispiels der Gleitlagerung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

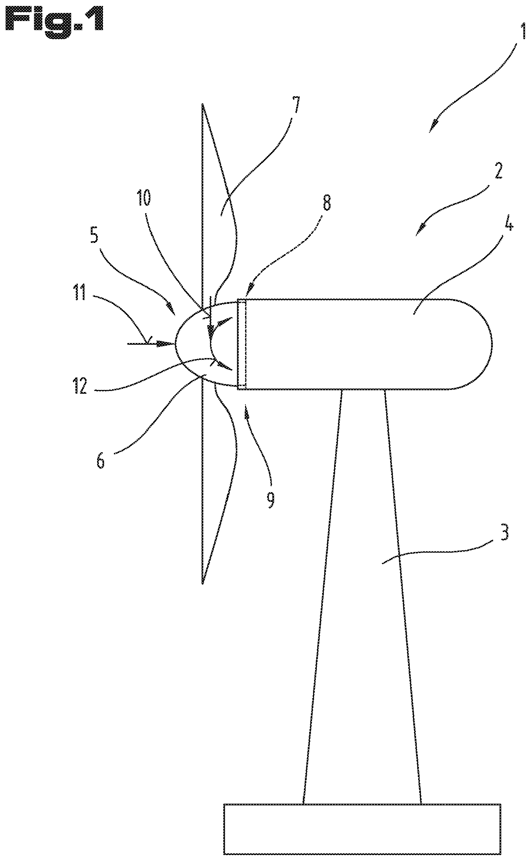

Fig. 1 zeigt in einer schematischen Darstellung ein erstes Ausführungsbeispiel einer Windkraftanlage 1 zum Erzeugen von elektrischer Energie aus Windenergie. Die Windkraftanlage 1 umfasst eine Gondel 2, welche an einem Turm 3 drehbar aufgenommen ist. Die Gondel 2 umfasst ein Gondelgehäuse 4, welches die Hauptstruktur der Gondel 2 bildet. Im Gondelgehäuse 4 der Gondel 2 sind die elelktrotechnischen Komponenten wie etwa ein Generator der Windkraftanlage 1 angeordnet.

Weiters ist ein Rotor 5 ausgebildet, welcher eine Rotornabe 6 mit daran angeordneten Rotorblättern 7 aufweist. Die Rotornabe 6 wird als Teil der Gondel 2 gesehen. Die Rotornabe 6 ist mittels einer Rotorlagerung 8 drehbeweglich am Gondelgehäuse 4 aufgenommen. Insbesondere ist vorgesehen, dass eine erfindungsgemäße und noch näher beschriebene Gleitlagerung 9 als Rotorlagerung 8 eingesetzt wird.

Die Rotorlagerung 8, welche zur Lagerung der Rotornabe 6 am Gondelgehäuse 4 der Gondel 2 dient, ist zur Aufnahme einer Radialkraft 10, einer Axialkraft 11 und eines Kippmomentes 12 ausgebildet. Die Axialkraft 11 ist bedingt durch die Kraft des Windes. Die Radialkraft 10 ist bedingt durch die Gewichtskraft des Rotors 5 und greift am Schwerpunkt des Rotors 5 an. Da der Schwerpunkt des Rotors 5 außerhalb der Rotorlagerung 8 liegt, wird in der Rotorlagerung 8 durch die Radialkraft 10 das Kippmoment 12 hervorgerufen. Das Kippmoment 12 kann ebenfalls durch eine ungleichmäßige Belastung der Rotorblätter 7 hervorgerufen werden.

Die erfindungsgemäße Rotorlagerung 8 kann beispielsweise einen Durchmesser zwischen 0,5 m und 5 m aufweisen. Natürlich ist es auch denkbar, dass die Rotorlagerung 8 kleiner oder größer ist.

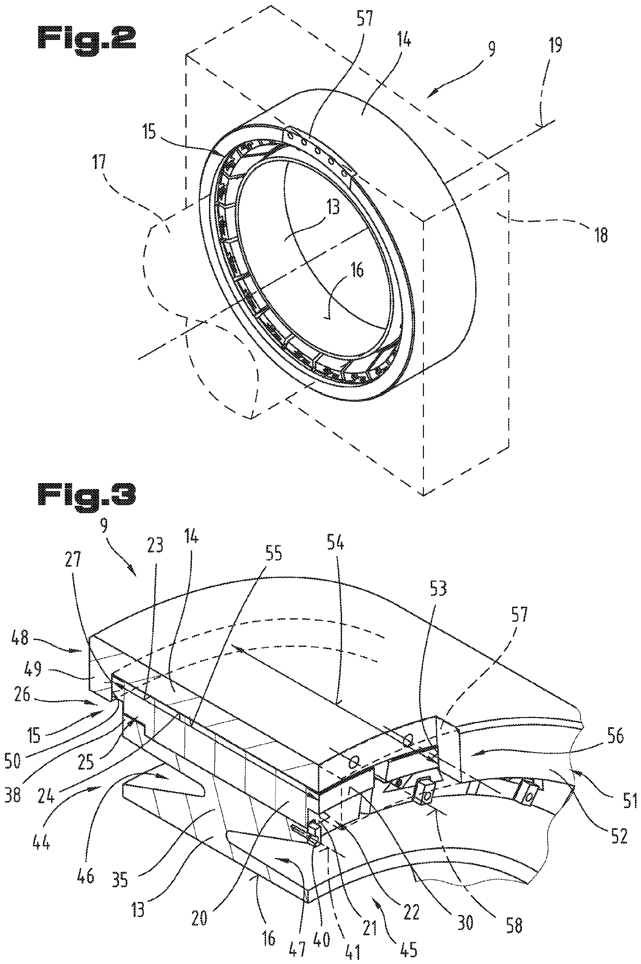

Fig. 2 zeigt ein erstes Ausführungsbeispiel der in der Gondel 2 verbauten Gleitlagerung 9. Die Gleitlagerung 9 ist in Fig. 2 in einer perspektivischen Ansicht dargestellt. Natürlich kann die in Fig. 2 dargestellte Gleitlagerung 9 auch in sämtlichen anderen Industrieanwendungen außerhalb von Windkraftanlagen eingesetzt werden.

Wie aus Fig. 2 ersichtlich, kann vorgesehen sein, dass die Gleitlagerung 9 ein inneres Ringelement 13 und ein äußeres Ringelement 14 aufweist. Zwischen dem inneren Ringelement 13 und dem äußeren Ringelement 14 ist ein Gleitlagerelement 15 angeordnet, welches zur rotatorischen Gleitlagerung des inneren Ringelementes 13 relativ zum äußeren Ringelement 14 dient.

Im Ausführungsbeispiel, welches in Fig. 2 dargestellt ist, ist am inneren Ringelement 13 eine Innenmantelfläche 16 ausgebildet, welche eine zylindrische Form aufweist und zur Aufnahme einer Rotorwelle 17 oder einer sonstigen Welle dient. Die Rotorwelle 17 ist in Fig. 2 schematisch dargestellt. Weiters kann vorgesehen sein, dass das äußere Ringelement 14 mittels einer Lagerhalterung 18 mit dem Gondelgehäuse 4 gekoppelt ist. Bei dem in Fig. 2 dargestellten Ausführungsbeispiel ist somit vorgesehen, dass das äußere Ringelement 14 starr mit dem Gondelgehäuse 4 gekoppelt ist und das innere Ringelement 13 mittels dem Gleitlagerelement 15 relativ zum äußeren Ringelement 14 bezüglich einer Rotorachse 19 verdrehbar ist. Da die Rotorwelle 17, welche mit der Rotornabe 6 und somit mit dem Rotor 5 gekoppelt ist, im inneren Ringelement 13 aufgenommen ist, ist somit die Rotorwelle 17 mittels der Gleitlagerung 9 im Gondelgehäuse 4 drehbar aufgenommen.

In Fig. 3 ist die Gleitlagerung 9 in einer perspektivischen Querschnittdarstellung dargestellt. Wie aus Fig. 3 ersichtlich, umfasst das Gleitlagerelement 15 mehrere einzelne Gleitlagerpads 20, welche über den Umfang verteilt zwischen dem inneren Ringelement 13 und dem äußeren Ringelement 14 angeordnet sind. Die einzelnen Gleitlagerpads 20 weisen ein Befestigungsprofil 21 auf, welches mit einem im inneren Ringelement 13 angeordneten Aufnahmeprofil 22 zusammenwirkt. Somit sind mittels dem Befestigungsprofil 21 bzw. dem Aufnahmeprofil 22 die Gleitlagerpads 20 lösbar am inneren Ringelement 13 aufgenommen.

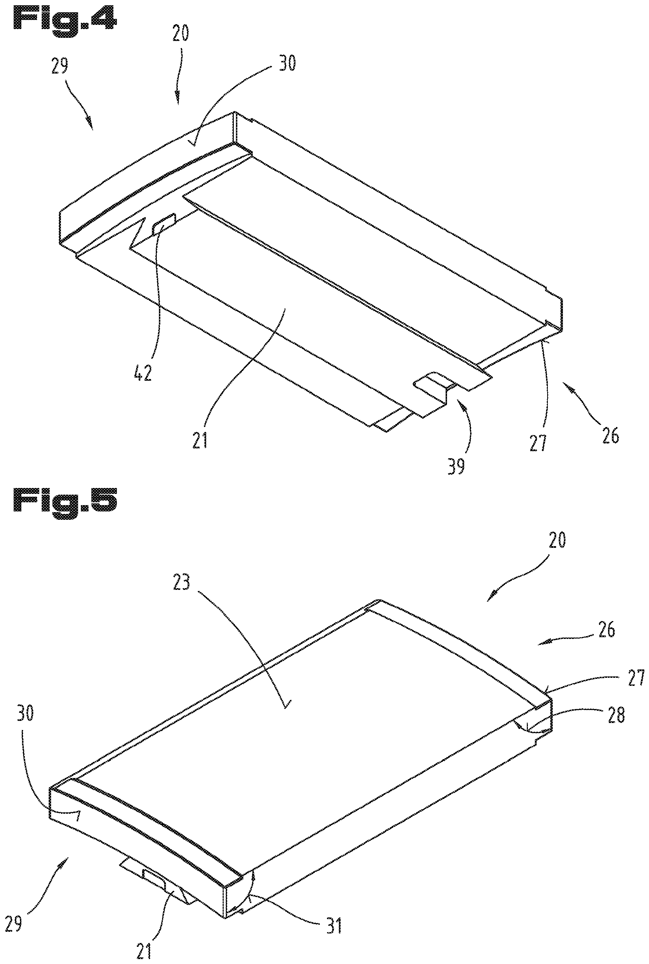

Die einzelnen Gleitlagerpads 20 sind in den Fig. 4 und 5 jeweils in einer perspektivischen Ansicht dargestellt. Der weitere Aufbau des Gleitlagers 9, insbesondere der Gleitlagerpads 20 erfolgt unter einer Zusammenschau der Figuren 3, 4 und 5.

Wie aus den Figuren 3, 4 und 5 ersichtlich, kann vorgesehen sein, dass das Befestigungsprofil 21 bzw. das Aufnahmeprofil 22 als Schwalbenschwanzverbindung ausgebildet ist. Somit können die einzelnen Gleitlagerpads 20 in Axialrichtung der Rotorachse 19 in das Aufnahmeprofil 22 des inneren Ringelements 13 eingeschoben werden bzw. aus diesem wieder herausgenommen werden. Dies dient zum einfachen Wechsel bzw. zur einfachen Montage der einzelnen Gleitlagerpads 20. Darüber hinaus kann durch die Schwalbenschwanzverbindung erreicht werden, dass die einzelnen Gleitlagerpads 20 durch die formschlüssig wirkende Schwalbenschwanzverbindung gut mit dem inneren Ringelement 13 verbunden sind.

Die einzelnen Gleitlagerpads 20 sind somit durch den beschriebenen Aufbau im Betriebszustand der Gleitlagerung 9 fest mit dem inneren Ringelement 13 verbunden und drehen sich somit mit diesem relativ zum äußeren Ringelement 14. Um die Drehbewegung zwischen dem inneren Ringelement 13 und dem äußeren Ringelement 14 zu ermöglichen, ist an den einzelnen Gleitlagerpads 20 dem Befestigungsprofil 21 gegenüberliegend jeweils eine Radiallagerfläche 23 ausgebildet, welche im einsatzbereiten Zustand der Gleitlagerung 9 an einer Gegenfläche 24 des äußeren Ringelementes 14 anliegt. Die Gegenfläche 24 ist an einer Innenseite 25 des äußeren Ringelements 14 angeordnet. Die Radiallagerfläche 23 des Gleitlagerpads 20 und die Gegenfläche 24 des äußeren Ringelements 14 sind als Gleitflächen ausgebildet, welche im Betrieb der Gleitlagerung 9 aneinander gleiten. Insbesondere kann vorgesehen sein, dass die Gegenfläche 24 des äußeren Ringelementes 14 als harte, verschleißfeste Oberfläche ausgebildet ist, welche beispielsweise durch einen gehärteten Stahl gebildet sein kann. Die Radiallagerfläche 23 des Gleitlagerpads 20 kann aus einem im Vergleich zur Gegenfläche 24 weichen Gleitlagerwerkstoff gebildet sein. Natürlich ist es auch denkbar, dass die Radiallagerfläche 23 eine Gleitbeschichtung aufweist.

Wie aus den Fig. 4 und 5 ersichtlich, ist am Gleitlagerpad 20 an einer ersten Stirnfläche 26 eine erste Axiallagerfläche 27 ausgebildet, welche zur Axiallagerung des inneren Ringelementes 13 am äußeren Ringelement 14 dient. Insbesondere ist vorgesehen, dass die erste Axiallagerfläche 27 in einem ersten Winkel 28 zur Radiallagerfläche 23 angeordnet ist. Da es sich bei der Radiallagerfläche 23 um einen Zylinderabschnitt handelt, kann der erste Winkel 28 am besten in einem Längsschnitt durch das Gleitlagerpad 20 bestimmt werden. Der erste Winkel 28 beträgt vorzugsweise 90°. Mit anderen Worten ausgedrückt, ist die erste Axiallagerfläche 27 im rechten Winkel zur Radiallagerfläche 23 angeordnet.

Analog dazu ist an einer zweiten Stirnfläche 29 des Gleitlagerpads 20 eine zweite Axiallagerfläche 30 ausgebildet, welche in einem zweiten Winkel 31 zur Radiallagerfläche 23 angeordnet ist. Der zweite Winkel 31 kann ebenfalls 90° betragen. Insbesondere kann vorgesehen sein, dass die erste Axiallagerfläche 27 und die zweite Axiallagerfläche 30 einander gegenüberliegend am Gleitlagerpad 20 ausgebildet sind. Die erste Axiallagerfläche 27 und die zweite Axiallagerfläche 30 können somit parallel zueinander angeordnet sein.

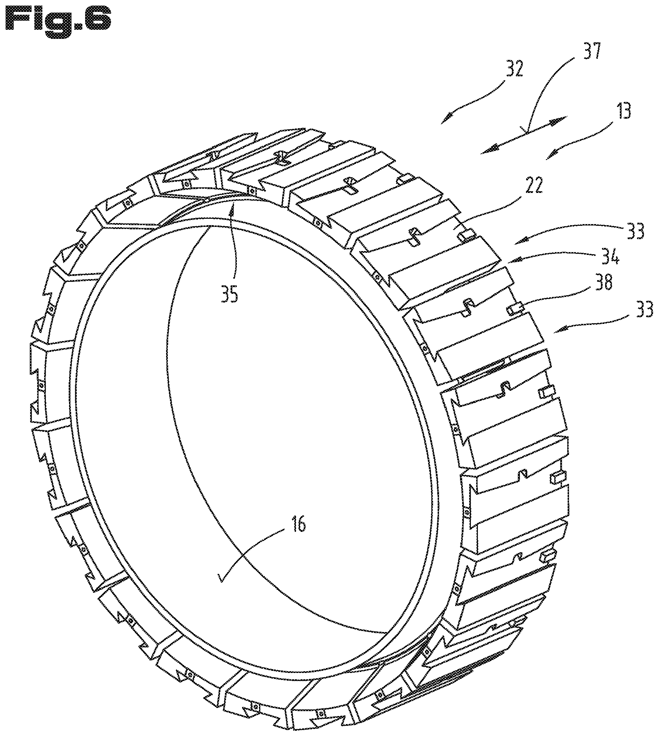

Fig. 6 zeigt eine perspektivische Ansicht des inneren Ringelementes 13. Wie aus einer Zusammenschau der Fig. 3 bis 6 ersichtlich, sind die einzelnen Aufnahmeprofile 22 an einer Außenseite 32 des inneren Ringelementes 13 angeordnet. Wie aus Fig. 6 weiters ersichtlich, kann vorgesehen sein, dass am inneren Ringelement 13 einzelne Kippsegmente 33 ausgebildet sind, in welchen die Aufnahmeprofile 22 angeordnet sind. Insbesondere kann vorgesehen sein, dass je Kippsegment 33 ein einzelnes Aufnahmeprofil 22 angeordnet ist. Die einzelnen Kippsegmente 33 können durch einen in Umfangsrichtung ausgebildeten Spalt 34 voneinander getrennt sein. Weiters sind die einzelnen Kippsegmente 33 mittels eines Verbindungsstückes 35 mit der Innenmantelfläche 16 des inneren Ringelementes 13 gekoppelt. Das Verbindungsstück 35 kann hierbei als Materialverjüngung ausgebildet sein, welche eine Elastizität aufweist. Durch diese Maßnahmen können die einzelnen Kippsegmente 33 einzeln und unabhängig voneinander bezüglich eines Verkippwinkels 36 relativ zur Innenmantelfläche 16 des inneren Ringelementes 13 verkippt werden. Die Verkippung der einzelnen Kippsegmente 33 erfolgt hierbei um eine in eine Axialrichtung 37 ausgerichteten Drehachse.

Wie besonders gut aus Fig. 6 ersichtlich, kann vorgesehen sein, dass innerhalb des Aufnahmeprofils 22 ein Axialanschlag 38 ausgebildet ist, welcher zum axialen Positionieren des Gleitlagerpads 20 dient. Weiters kann vorgesehen sein, dass im Befestigungsprofil 21 des Gleitlagerpads 20 eine Axialanschlagausnehmung 39 ausgebildet ist, welche mit dem Axialanschlag 38 korrespondiert. Durch die Axialanschlagausnehmung 39 kann erreicht werden, dass im zusammengebauten Zustand die erste Axiallagerfläche 27 gegenüber dem inneren Ringelement 13 vorstehend ausgebildet ist.

Wie aus Fig. 3 ersichtlich, kann vorgesehen sein, dass ein Axialklemmelement 40 mittels eines Befestigungsmittels 41 am inneren Ringelement 13 befestigt ist und auf die zweite Stirnfläche 29 des Gleitlagerpads 20 einwirkt, sodass das Gleitlagerpad 20 zwischen dem Axialklemmelement 40 und dem Axialanschlag 38 geklemmt wird.

Wie besonders gut in Fig. 4 ersichtlich, kann vorgesehen sein, dass am Gleitlagerpad 20, insbesondere am Befestigungsprofil 21 eine Axialklemmelementausnehmung 42 ausgebildet ist, welche mit dem Axialklemmelement 40 zusammenwirkt.

Wie aus Fig. 3 weiters ersichtlich, kann vorgesehen sein, dass der Axialanschlag 38 an einer ersten Stirnseite 44 des inneren Ringelementes 13 angeordnet ist und dass das Axialklemmelement 40 an einer zweiten Stirnseite 45 des inneren Ringelementes 13 angeordnet ist.

Wie aus Fig. 3 ebenfalls ersichtlich, kann vorgesehen sein, dass an der ersten Stirnseite 44 des inneren Ringelementes 13 eine erste Ausnehmung 46 ausgebildet ist und an der zweiten Stirnseite 45 eine zweite Ausnehmung 47 ausgebildet ist, wobei durch das Vorsehen der Ausnehmungen 46, 47 das flexible Verbindungsstück gebildet wird.

Wie aus Fig. 3 weiters ersichtlich, kann vorgesehen sein, dass das äußere Ringelement 14 an einer ersten Stirnseite 48 eine erste Stirnwand 49 aufweist, wobei die erste Stirnwand 49 über die Gegenfläche 24 des äußeren Ringelementes 14 vorstehend ausgebildet ist. An der ersten Stirnwand 49 ist eine erste Stirnwandinnenfläche 50 ausgebildet, welche als Anlagefläche für die erste Axiallagerfläche 27 der Gleitlagerpads 20 dient. Die erste Stirnwandinnenfläche 50 kann hierbei analog zur Gegenfläche 24 ebenfalls als harte, verschleißbeständige Fläche ausgebildet sein und die erste Axiallagerfläche 27 analog zur Radiallagerfläche 23 ebenfalls als weiche Fläche aus einem Gleitlagermaterial ausgebildet sein.

An einer zweiten Stirnseite 51 des äußeren Ringelementes 14 kann eine zweite Stirnwand 52 ausgebildet sein, welche eine zweite Stirnwandinnenfläche 53 aufweist. Die zweite Stirnwandinnenfläche 50 kann mit der zweiten Stirnfläche 29 des Gleitlagerpads 20 zusammenwirken. Der Aufbau der zweiten Stirnwand 52 kann analog zum Aufbau der ersten Stirnwand 49 ausgebildet sein.

Weiters kann vorgesehen sein, dass die erste Stirnwandinnenfläche 50 und die zweite Stirnwandinnenfläche 53 des äußeren Ringelementes 14 in einem Axialabstand 54 zueinander angeordnet sind. Die erste Axiallagerfläche 27 und die zweite Axiallagerfläche 30 des Gleitlagerpads 20 sind in einem Axialabstand 55 zueinander angeordnet. Der Axialabstand 54 der Stirnwandinnenflächen 50, 53 und der Axialabstand 55 der Axiallagerflächen 27, 30 sind vorzugsweise so bemessen, dass eine Spielpassung ausgebildet ist.

Wie aus Fig. 3 weiters ersichtlich, kann vorgesehen sein, dass in der zweiten Stirnwand 52 des äußeren Ringelementes 14 eine Öffnung 56 ausgebildet ist, welche zum axialen Einsetzen und Herausnehmen von einzelnen Gleitlagerpads 20 in das innere Ringelement 13 dient. Weiters kann vorgesehen sein, dass ein Deckel 57 ausgebildet ist, welcher mittels Befestigungsmittel 58 am äußeren Ringelement 14 befestigt werden kann, um die Öffnung 56 zu verschlie-ßen.

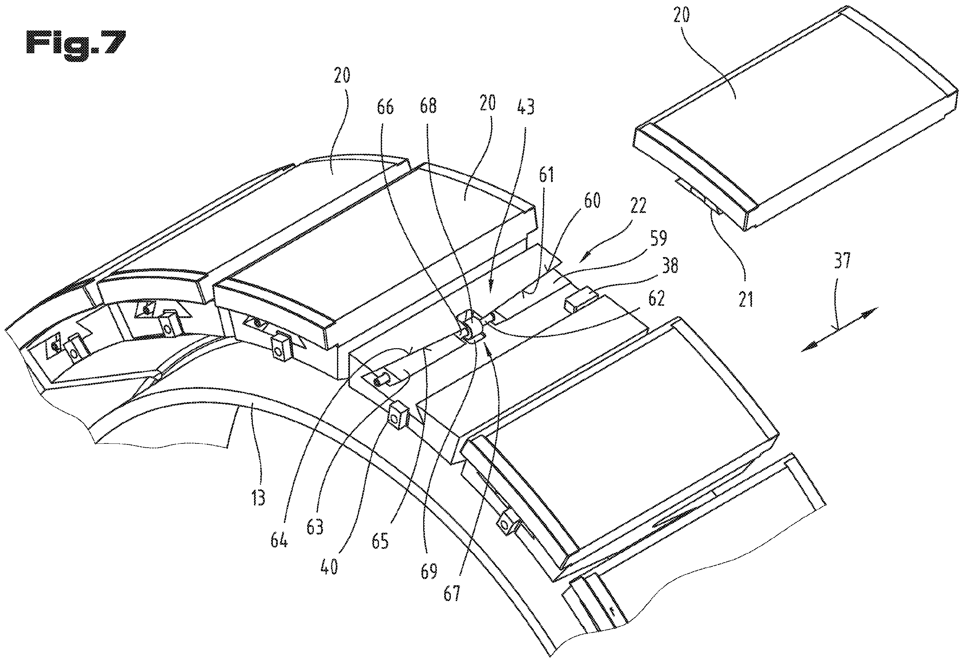

Fig. 7 zeigt eine perspektivische Ansicht des inneren Ringelementes 13 mitsamt den daran angeordneten Gleitlagerpads 20. Zur besseren Darstellung der Funktion der Verbindung zwischen den einzelnen Gleitlagerpads 20 und dem inneren Ringelement 13 ist eines der Gleitlagerpads 20 zur Seite geschoben.

Wie aus Fig. 7 ersichtlich, kann vorgesehen sein, dass eine Klemmvorrichtung 43 ausgebildet ist, welche zum Fixieren des Gleitlagerpads 20 im inneren Ringelement 13 dient. Die Klemmvorrichtung 43 kann insbesondere zwischen dem Befestigungsprofil 21 des Gleitlagerpads 20 und dem Aufnahmeprofil 22 des inneren Ringelementes 13 wirken bzw. zur Gänze oder teilweise im Aufnahmeprofil 22 angeordnet sein. Wie aus Fig. 7 weiters ersichtlich, kann vorgesehen sein, dass die Klemmvorrichtung 43 zumindest einen ersten Klemmkeil 59 umfasst, welcher eine Keilfläche 60 aufweist. Im Aufnahmeprofil 22 ist eine Gegenkeilfläche 61 ausgebildet, welche sich in Axialrichtung 37 verjüngt und welche mit der Keilfläche 60 zusammenwirkt. Weiters ist ein erstes Positioniermittel 62 vorgesehen, mittels welchem der erste Klemmkeil 59 in Axialrichtung 37 verschiebbar ist. Durch Verschieben des ersten Klemmkeiles 59 in Axialrichtung 37 kann die Schwalbenschwanzaufnahme für das Befestigungsprofil 21 des Gleitlagerpads 20 vergrößert bzw. verkleinert werden, wodurch eine Klemmung des Befestigungsprofils 21 erreicht werden kann.

Analog dazu kann vorgesehen sein, dass die Klemmvorrichtung 43 einen zweiten Klemmkeil 63 umfasst, welcher ebenfalls eine Keilfläche 64 aufweist. Die Keilfläche 64 kann mit einer im Aufnahmeprofil 22 ausgebildeten und sich in Axialrichtung 37 verjüngenden zweiten Gegenkeilfläche 65 zusammenwirken. Die erste Gegenkeilfläche 61 und die zweite Gegenkeilfläche 65 sind entgegengesetzt verjüngend ausgebildet. Der zweite Klemmkeil 63 ist mittels einem zweiten Positioniermittel 66 in Axialrichtung 37 verschiebbar. Insbesondere kann vorgesehen sein, dass das erste Positioniermittel 62 und das zweite Positioniermittel 66 an einer gemeinsamen Positionierstange 67 ausgebildet sind. Weiters kann vorgesehen sein, dass die Positionierstange 67 eine Axialführung 68 aufweist, welche in einer Positionierstangenaufnahme 69 aufgenommen ist, wobei die Positionierstangenaufnahme 69 im Aufnahmeprofil 22 ausgebildet ist. Die Axialführung 68 kann beispielsweise als Tonne ausgebildet sein.

Insbesondere kann vorgesehen sein, dass das erste Positioniermittel 62 ein Linksgewinde aufweist und das zweite Positioniermittel 66 ein Rechtsgewinde aufweist, sodass beim Verdrehen der Positionierstange 67 in eine erste Richtung die beiden Klemmkeile 59, 63 voneinander entfernt werden und beim Drehen der Positionierstange 67 in einer zweiten Drehrichtung die beiden Klemmkeile 59, 63 aufeinander zubewegt werden. Somit kann durch Verdrehen der Positionierstange 67 die Klemmung geöffnet bzw. geschlossen werden. Natürlich können das Linksgewinde und das Rechtsgewinde auch vertauscht sein.

Anhand der Fig. 3 und 7 wird ein Zusammenbau der Gleitlagerung 9 beschrieben. In einem ersten Verfahrensschritt wird das äußere Ringelement 14 an seinem Aufstellungsort, beispielsweise im Gondelgehäuse 4, fixiert. Anschließend wird eine Welle, beispielsweise die Rotorwelle 17, mit dem darauf angeordneten inneren Ringelement 13 in Axialrichtung in das äußere Ringelement 14 eingeschoben, wobei bei diesem Vorgang die einzelnen Gleitlagerpads 20 noch nicht am inneren Ringelement 13 angeordnet sind. Anschließend wird das innere Ringelement 13 in Axialposition und auch in Radialposition relativ zum äußeren Ringelement 14 koaxial ausgerichtet.

Anschließend kann die Klemmvorrichtung 43 im Aufnahmeprofil 22 positioniert werden. Beim Positionieren der Klemmvorrichtung 43 im Aufnahmeprofil 22 werden der erste Klemmkeil 59 und der zweite Klemmkeil 63 im Aufnahmeprofil 22 so weit voneinander beabstandet angeordnet, dass das Befestigungsprofil 21 des Gleitlagerpads 20 leichtgängig in Axialrichtung in das Aufnahmeprofil 22 eingeschoben werden kann. Alternativ können die einzelnen Klemmvorrichtungen 43 schon vor dem Fügen des inneren Ringelementes 13 mit dem das äußeren Ringelement 14 im Aufnahmeprofil 22 positioniert werden.

Anschließend kann durch die Öffnung 56 ein Gleitlagerpad 20 in Axialrichtung 37 auf das innere Ringelement 13 aufgeschoben werden. Hierbei wird das Befestigungsprofil 21 des Gleitlagerpads 20 in das Aufnahmeprofil 22 eingeschoben.

Das Gleitlagerpad 20 wird so weit in das Aufnahmeprofil 22 eingeschoben bis die Axialanschlagausnehmung 39 am Axialanschlag 38 anliegt. Dadurch ist die Axialposition des Gleitlagerpads 20 definiert. Anschließend kann das Axialklemmelement 40 an das innere Ringelement 13 appliziert werden um das Gleitlagerpad 20 in seiner axialen Position zu sichern. Anschließend kann die Positionierstange 67 in Zudrehrichtung gedreht werden, sodass die beiden Klemmkeile 59, 63 aufeinander zugezogen werden. Durch diese Bewegung der beiden Klemmkeile 59, 63 respektive durch die Keilflächen 60, 64 wird das Befestigungsprofil 21 der Gleitlagerpads 20 im Aufnahmeprofil 22 mittels der Klemmkeile 59, 63 geklemmt. Somit wird das Gleitlagerpad 20 am inneren Ringelement 13 fixiert. Optional kann nun das Befestigungsmittel 41 des Axialklemmelementes 40 noch nachgezogen werden.

Anschließend wird das innere Ringelement 13 mitsamt der Welle um einen Winkel verdreht, sodass das nächste Gleitlagerpad 20 in der obig beschriebenen Weise durch die Öffnung 56 in das innere Ringelement 13 eingesetzt werden kann. Die obig beschriebenen Vorgänge werden wiederholt, bis in allen Aufnahmeprofilen 22 des inneren Ringelements 13 ein Gleitlagerpad 20 aufgenommen ist.

Anschließend kann der Deckel 57 mittels der Befestigungsmittel 58 in der Öffnung 56 befestigt werden um das äußere Ringelement 14 somit zu verschließen.

Nach dem Fertigstellen der Montage kann eine für die Montage notwendige Halterung bzw. Lagerung der Welle entfernt werden, sodass die Welle mittels der Gleitlagerung 9 in der Lagerhalterung 18 gelagert ist und somit betriebsbereit ist.

Zum Austausch der einzelnen Gleitlagerpads 20 ist es nicht notwendig, dass die Last der Welle von einer externen Lagerung aufgenommen wird, sondern kann vorgesehen sein, dass immer nur ein einzelnes Gleitlagerpad 20 gegen ein neues Gleitlagerpad 20 ersetzt wird, wobei dieser Vorgang wiederholt wird, bis alle Gleitlagerpads 20 ausgetauscht sind. Hierbei kann der Deckel 57 vom äußeren Ringelement 14 abgenommen werden. Anschließend kann die Klemmvorrichtung 43 gelöst werden und nach dem Entfernen des Axialklemmelementes 40 das gelöste Gleitlagerpad 20 in Axialrichtung 37 aus dem inneren Ringelement 13 herausgezogen werden. Anschließend kann ein neues Gleitlagerpad 20 entsprechend der obigen Beschreibung in die Position des alten Gleitlagerpads 20 eingesetzt werden. Anschließend kann das neu eingesetzte Gleitlagerpad 20 fixiert werden und anschließend das innere Ringelement 13 verdreht werden, sodass das nächste Gleitlagerpad entsprechend den obig beschriebenen Schritten ausgetauscht werden kann. Dieser Vorgang kann wiederholt werden, bis alle Gleitlagerpads 20 ausgetauscht sind.

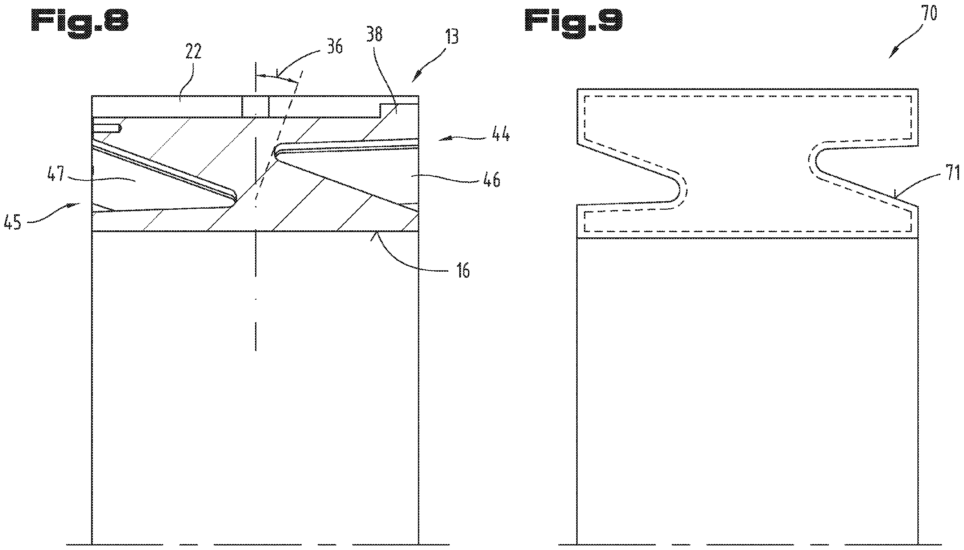

Anhand der Fig. 8 und 9 wird der Herstellprozess zum Herstellen des inneren Ringelementes 13 beschrieben. Fig. 8 zeigt einen Querschnitt des fertigen inneren Ringelementes 13 und Fig. 9 zeigt in einer gleichen Ansicht den Querschnitt eines Innenringrohlings 70 aus welchem das innere Ringelement 13 gefertigt wird.

Der Innenringrohling 70 wird zur groben Formgebung einer Rohlingkontur 71 vorgeschmiedet. Dies kann beispielsweise mittels einem Ringwalzwerk erfolgen. Anschließend kann der Innenringrohling 70 normal geglüht werden, sodass er die durch den Walzvorgang entstandenen inneren Spannungen verliert.

Anschließend kann der Innenringrohling normalgeglüht werden. Die Auswahl der Temperaturen bzw. der Zeitdauer für den Normalglühvorgang liegt im Können des Fachmanns.

Anschließend kann durch zerspanende Bearbeitung des Innenringrohlings 70 die Endkontur des inneren Ringelementes 13 hergestellt werden. Insbesondere kann das Aufnahmeprofil 22 die Spalte 34 sowie die erste Ausnehmung 46 und die zweite Ausnehmung 47 durch die zerspanende Bearbeitung hergestellt werden. Darüber hinaus kann die Innenmantelfläche 16 des inneren Ringelementes 13 auf das Maß einer Passung gefertigt werden.

Alternativ ist es auch denkbar, dass die zerspanende Bearbeitung des Innenringrohlings 70 in zwei Schritten erfolgt, wobei gewisse Bereiche noch nicht auf die endgültige Endkontur des inneren Ringelementes 13 gefertigt werden, sondern in einem ersten Zerspanungsschritt an gewissen Flächen ein Aufmaß belassen wird. Anschließend kann der teilweise bearbeitete Innenringrohling 70 vergütet werden und anschließend durch zerspanende Bearbeitung auf seine Endkontur bearbeitet werden. Hierbei ist es beispielsweise denkbar, dass für das zerspanende Bearbeiten des inneren Ringelementes 13 nach dem Vergüten nur noch eine Schleifbearbeitung eingesetzt wird.

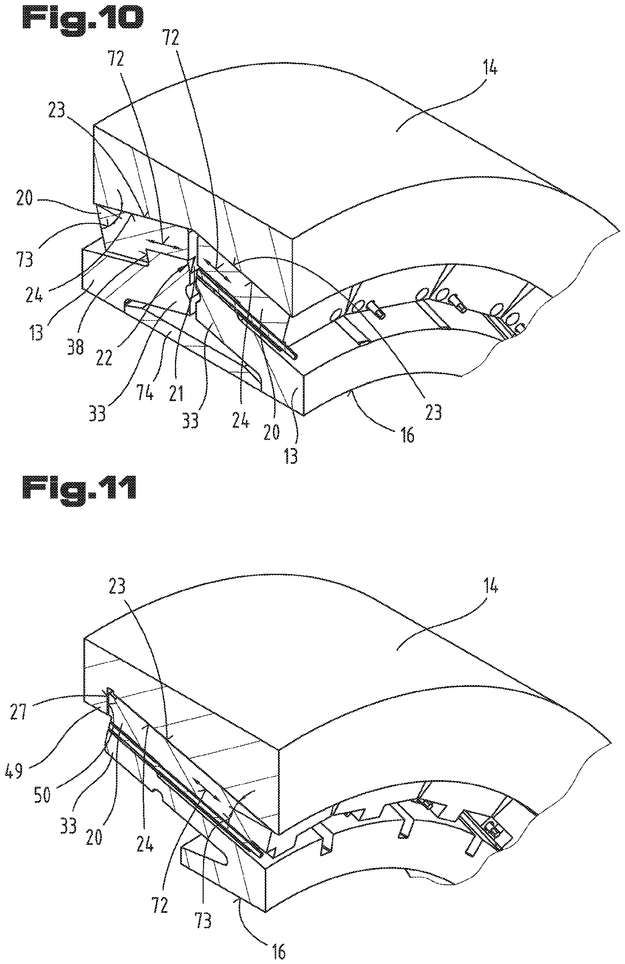

In der Fig. 10 ist eine weitere und gegebenenfalls für sich eigenständige Ausführungsform der Gleitlagerung 9 gezeigt, wobei wiederum für gleiche Teile gleiche Bezugszeichen bzw. Bauteilbezeichnungen wie in den vorangegangenen Figuren 2 bis 9 verwendet werden. Um unnötige Wiederholungen zu vermeiden, wird auf die detaillierte Beschreibung in den vorangegangenen Figuren 2 bis 9 hingewiesen bzw. Bezug genommen.

Wie aus Fig. 10 ersichtlich, kann vorgesehen sein, dass in gespiegelter oder gegengleicher Ausführung zwei innere Ringelemente 13 ausgebildet sind, welche jeweils zur Aufnahme von Gleitlagerpads 20 dienen. Somit sind einander gegenüberliegend in Axialrichtung 37 voneinander beabstandet zwei Gleitlagerpads 20 angeordnet. Die einander gegenüberliegend angeordneten Gleitlagerpads 20, insbesondere deren Radiallagerflächen 23, können hierbei in einem Winkel 73 zur Innenmantelfläche 16 des inneren Ringelements 13 angeordnet sein. Die Radiallagerflächen 23 können somit V-förmig ausgebildet sein. Damit korrespondierend kann die Gegenfläche 24 ebenfalls V-förmig ausgebildet sein. Bei einer derartigen Ausführungsvariante können die Radiallagerflächen 23 bzw. die Gegenfläche 24 Radiallagerkräfte und auch gleichzeitig Axiallagerkräfte aufnehmen. Somit ist es bei einer derartigen Ausführungsvariante nicht erforderlich, dass eine zusätzliche Axiallagerung ausgebildet ist.

Das Befestigungssystem für die Gleitlagerpads 20 am inneren Ringelement 13 kann analog zum obig beschriebenen Ausführungsbeispiel der Figuren 2 bis 9 ausgeführt sein. Hierbei kann vorgesehen sein, dass am Gleitlagerpad 20 das Befestigungsprofil 21 vorgesehen ist, welches mit dem Aufnahmeprofil 22 des inneren Ringelementes 13 korrespondiert.

Das Befestigungsprofil 21 kann hierbei ebenfalls als Federelement ausgebildet sein und das Aufnahmeprofil 22 als Nut ausgebildet sein, wobei insbesondere eine Schwalbenschwanzverbindung vorgesehen sein kann.

Weiters kann ein Axialanschlag 38 am inneren Ringelement 13 angeordnet sein, welcher zur Axialpositionierung der Gleitlagerpads 20 dient. Analog zum obigen Ausführungsbeispiel können die Gleitlagerpads 20 mittels dem Axialklemmelement 40 in Axialrichtung gesichert werden bzw. mit der Klemmvorrichtung 43 am inneren Ringelement 13 befestigt bzw. gesichert werden.

Die beiden inneren Ringelemente 13 können jeweils Kippsegmente 33 aufweisen, an welchem das Aufnahmeprofil 22 ausgebildet ist. Die Kippsegmente 33 können hierbei jeweils in Form eines auskragenden Armes ausgebildet sein.

Beim Zusammenbau bzw. beim Tausch der Gleitlagerpads 20 werden diese nicht, wie im vorherigen Ausführungsbeispiel beschrieben in Axialrichtung 37 zwischen das innere Ringelement 13 und das äußere Ringelement 14 eingeschoben, sondern in Diagonalrichtung 72 zwischen das innere Ringelement 13 und das äußere Ringelement 14 eingeschoben. Die Einschieberichtung bzw. Diagonalrichtung 72 verläuft hierbei im Querschnitt gesehen parallel zur Gegenfläche 24.

Weiters ist zwischen den beiden inneren Ringelementen 13 ein Abstandhalter 74 ausgebildet, mittels welchem der Lagerspalt definiert wird.

In der Fig. 11 ist eine weitere und gegebenenfalls für sich eigenständige Ausführungsform der Gleitlagerung 9 gezeigt, wobei wiederum für gleiche Teile gleiche Bezugszeichen bzw. Bauteilbezeichnungen wie in den vorangegangenen Figuren 2 bis 10 verwendet werden. Um unnötige Wiederholungen zu vermeiden, wird auf die detaillierte Beschreibung in den vorangegangenen Figuren 2 bis 10 hingewiesen bzw. Bezug genommen.

Das Ausführungsbeispiel der Gleitlagerung 9 aus der Fig. 11 ist vom Aufbau her ähnlich dem Ausführungsbeispiel der Gleitlagerung 9 aus Fig. 10. Im Ausführungsbeispiel nach Fig. 11 sind ebenfalls über den Umfang verteilt mehrere Gleitlagerpads 20 angeordnet, wobei jedoch nur eine Reihe von Gleitlagerpads 20 ausgebildet ist.

Die Gleitlagerpads 20 weisen jeweils die Radiallagerfläche 23 und die erste Axiallagerfläche 27 auf. Im verbauten Zustand ist hierbei die Radiallagerfläche 23 im Winkel 73 zur Innenmantelfläche 16 des inneren Ringelementes 13 angeordnet. Die erste Axiallagerfläche 27 kann im rechten Winkel zur Innenmantelfläche 16 des inneren Ringelementes 13 angeordnet sein.

Die Radiallagerfläche 23 und die erste Axiallagerfläche 27 sind bei einem derartigen Ausführungsbeispiel V-förmig angeordnet. Die Radiallagerfläche 23 kann somit zur Aufnahme von Radiallagerkräften und Axiallagerkräften in eine erste Axialrichtung dienen. Die erste Axiallagerfläche 27 dient zur Aufnahme von Axialkräften in die zweite Axialrichtung. Derartige Axialkräfte in die zweite Axialrichtung werden durch die Schräge der Radiallagerfläche 23 auch beim Aufbringen von reinen Radiallagerkräften auf die Radiallagerfläche 23 in die erste Axiallagerfläche 27 eingeleitet.

Die Verbindung zwischen den einzelnen Gleitlagerpads 20 und dem inneren Ringelement 13 kann analog zu den obig beschriebenen Ausführungsbeispielen ausgeführt sein.

In den Ausführungsbeispielen der Gleitlagerung 9, wie sie in den Fig. 10 oder 11 dargestellt sind, kann der Winkel 73 zwischen 0° und 45°, insbesondere zwischen 5° und 30°, bevorzugt zwischen 15° und 20° betragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Windkraftanlage | 30 | zweite Axiallagerfläche |
| 2 | Gondel | 31 | zweiter Winkel |
| 3 | Turm | 32 | Außenseite |
| 4 | Gondelgehäuse | 33 | Kippsegment |
| 5 | Rotor | 34 | Spalt |
| 6 | Rotornabe | 35 | Verbindungsstück |
| 7 | Rotorblatt | 36 | Verkippwinkel |
| 8 | Rotorlagerung | 37 | Axialrichtung |
| 9 | Gleitlagerung | 38 | Axialanschlag |
| 10 | Radialkraft | 39 | Axialanschlagausnehmung |
| 11 | Axialkraft | 40 | Axialklemmelement |
| 12 | Kippmoment | 41 | Befestigungsmittel |
| 13 | inneres Ringelement | 42 | Axialklemmelementausnehmung |
| 14 | äußeres Ringelement | 43 | Klemmvorrichtung |
| 15 | Gleitlagerelement | 44 | erste Stirnseite |
| 16 | Innenmantelfläche inneres Rin- | 45 | zweite Stirnseite |
| | gelement | 46 | erste Ausnehmung |
| 17 | Rotorwelle | 47 | zweite Ausnehmung |
| 18 | Lagerhalterung | 48 | erste Stirnseite |
| 19 | Rotorachse | 49 | erste Stirnwand |
| 20 | Gleitlagerpad | 50 | erste Stirnwandinnenfläche |
| 21 | Befestigungsprofil | 51 | zweite Stirnseite |
| 22 | Aufnahmeprofil | 52 | zweite Stirnwand |
| 23 | Radiallagerfläche | 53 | zweite Stirnwandinnenfläche |
| 24 | Gegenfläche | 54 | Axialabstand Stirnwandinnenflächen |
| 25 | Innenseite | | |
| 26 | erste Stirnfläche Gleitlagerpad | 55 | Axialabstand Axiallagerflächen |
| 27 | erste Axiallagerfläche | 56 | Öffnung |
| 28 | erster Winkel | 57 | Deckel |
| 29 | zweite Stirnfläche Gleitlagerpad | 58 | Befestigungsmittel |
| 59 | erster Klemmkeil | | |
| 60 | Keilfläche erster Klemmkeil | | |
| 61 | erste Gegenkeilfläche | | |
| 62 | erstes Positioniermittel | | |
| 63 | zweiter Klemmkeil | | |
| 64 | Keilfläche zweiter Klemmkeil | | |
| 65 | zweite Gegenkeilfläche | | |
| 66 | zweites Positioniermittel | | |
| 67 | Positionierstange | | |
| 68 | Axialführung | | |
| 69 | Positionierstangenaufnahme | | |
| 70 | Innenringrohling | | |
| 71 | Rohlingkontur | | |
| 72 | Diagonalrichtung | | |
| 73 | Winkel | | |
| 74 | Abstandhalter | | |

## Patentansprüche

1. Gleitlagerung (9) umfassend:
- ein inneres Ringelement (13);
- ein äußeres Ringelement (14);
- zumindest ein Gleitlagerelement (15), welches zwischen dem inneren Ringelement (13) und dem äußeren Ringelement (14) angeordnet ist,
wobei
das Gleitlagerelement (15) mehrere Gleitlagerpads (20) aufweist, wobei die einzelnen Gleitlagerpads (20) jeweils eine Radiallagerfläche (23) und ein der Radiallagerfläche (23) gegenüberliegendes Befestigungsprofil (21) aufweisen, und wobei das innere Ringelement (13) an dessen radialer Außenseite (32) zumindest ein Aufnahmeprofil (22) aufweist, welches zur formschlüssigen Verbindung der Gleitlagerpads (20) mit dem inneren Ringelement (13) dient, wobei das Befestigungsprofil (21) des Gleitlagerpads (20) und das Aufnahmeprofil (22) des inneren Ringelements (13) derart ausgebildet sind, dass das Gleitlagerpad (20) in Axialrichtung (37) oder in Diagonalrichtung (72) in das innere Ringelement (13) einschiebbar ist, wobei am inneren Ringelement (13) im Bereich des Aufnahmeprofils (22) ein Axialanschlag (38) für das Gleitlagerpad (20) ausgebildet ist, wobei am inneren Ringelement (13) im Bereich des Aufnahmeprofils (22) ein lösbares Axialklemmelement (40) für das Gleitlagerpad (20) ausgebildet ist, wobei eine erste Stirnfläche (26) des Gleitlagerpads (20) in Axialrichtung (37) an den Axialanschlag (38) anlegbar ist und das Axialklemmelement (40) auf eine zweite Stirnfläche (29) des Gleitlagerpads (20) einwirkbar ist, **dadurch gekennzeichnet, dass** für jedes der Gleitlagerpads (20) ein eigenes Axialklemmelement (40) vorgesehen ist, welches mittels eines Befestigungsmittels (41) am inneren Ringelement (13) befestigt ist und auf die zweite Stirnfläche (29) des Gleitlagerpads (20) einwirkt, sodass das Gleitlagerpad (20) zwischen dem Axialklemmelement (40) und dem Axialanschlag (38) geklemmt wird.

2. Gleitlagerung (9) nach Anspruch 1, **dadurch gekennzeichnet, dass** das Befestigungsprofil (21) und das Aufnahmeprofil (22) als Schwalbenschwanzverbindung ausgebildet sind.

3. Gleitlagerung (9) nach einem der vorhergehenden Ansprüche, **dadurch gekennzeichnet, dass** zwischen dem Befestigungsprofil (21) des Gleitlagerpads (20) und dem Aufnahmeprofil (22) des inneren Ringelements (13) eine Klemmvorrichtung (43) angeordnet ist, mittels welcher das Gleitlagerpad (20) klemmbar ist.

4. Gleitlagerung (9) nach Anspruch 3, **dadurch gekennzeichnet, dass** die Klemmvorrichtung (43) zumindest einen ersten Klemmkeil (59) umfasst, welcher eine Keilfläche (60) aufweist, die mit einer im Aufnahmeprofil (22) ausgebildeten und sich in Axialrichtung (37) verjüngenden ersten Gegenkeilfläche (61) zusammenwirkt, wobei der erste Klemmkeil (59) mittels einem ersten Positioniermittel (62), insbesondere einem Gewindeelement, in Axialrichtung (37) verschiebbar ist.

5. Gleitlagerung (9) nach Anspruch 4, **dadurch gekennzeichnet, dass** die Klemmvorrichtung (43) einen zweiten Klemmkeil (63) umfasst, welcher eine Keilfläche (64) aufweist, die mit einer im Aufnahmeprofil (22) ausgebildeten und sich in Axialrichtung (37) verjüngenden zweiten Gegenkeilfläche (65) zusammenwirkt, wobei die erste Gegenkeilfläche (61) und die zweite Gegenkeilfläche (65) entgegengesetzt verjüngend ausgebildet sind, wobei der zweite Klemmkeil (63) mittels einem zweiten Positioniermittel (66), insbesondere einem Gewindeelement, in Axialrichtung (37) verschiebbar ist.

6. Gleitlagerung (9) nach Anspruch 5, **dadurch gekennzeichnet, dass** das erste Positioniermittel (62) und das zweite Positioniermittel (66) an einer gemeinsamen Positionierstange (67) ausgebildet sind, wobei das erste Positioniermittel (62) ein Rechtsgewinde und das zweite Positioniermittel (66) ein Linksgewinde aufweist.

7. Gleitlagerung (9) nach einem der vorhergehenden Ansprüche, **dadurch gekennzeichnet, dass** am Gleitlagerpad (20) zumindest eine erste Axiallagerfläche (27) ausgebildet ist, welche im Längsschnitt gesehen in einem ersten Winkel (28) von 90° zur Radiallagerfläche (23) angeordnet ist, insbesondere dass am Gleitlagerpad (20) auch eine zweite Axiallagerfläche (30) ausgebildet ist, welche in einem zweiten Winkel (31) von 90° zur Radiallagerfläche (23) angeordnet ist und welche der ersten Axiallagerfläche (27) gegenüberliegend angeordnet ist.

8. Gleitlagerung (9) nach einem der vorhergehenden Ansprüche, **dadurch gekennzeichnet, dass** das innere Ringelement (13) mehrere Kippsegmente (33) aufweist, welche über den Umfang verteilt angeordnet sind, wobei die einzelnen Kippsegmente (33) in Umfangsrichtung beabstandet zueinander angeordnet sind und unabhängig voneinander verkippbar sind, wobei je Kippsegment (33) zumindest eines der Aufnahmeprofile (22) ausgebildet ist.

9. Gleitlagerung (9) nach Anspruch 8, **dadurch gekennzeichnet, dass** die einzelnen Kippsegmente (33) in Axialrichtung (37) gesehen zumindest an einer ersten Stirnseite (44) eine erste Ausnehmung (46) aufweisen, insbesondere dass die einzelnen Kippsegmente (33) in Axialrichtung (37) gesehen an einer zweiten Stirnseite (45) eine zweite Ausnehmung (47) aufweisen, insbesondere dass die einzelnen Kippsegmente (33) im Querschnitt gesehen Z-Förmig ausgebildet sind.

10. Gleitlagerung (9) nach einem der vorhergehenden Ansprüche, **dadurch gekennzeichnet, dass** das äußere Ringelement (14) hülsenförmig ausgebildet ist, wobei an einer ersten Stirnseite (48) eine radial nach innen vorstehende erste Stirnwand (49) ausgebildet ist und dass eine erste Axiallagerfläche (27) des Gleitlagerpads an der ersten Stirnwand (49) anliegt.

11. Gondel (2) für eine Windkraftanlage (1), die Gondel (2) umfassend:
- ein Gondelgehäuse (4);
- eine Rotornabe (6);
- eine Rotorlagerung (8) zur Lagerung der Rotornabe (6) am Gondelgehäuse (4), **dadurch gekennzeichnet, dass** die Rotorlagerung (8) eine Gleitlagerung (9) nach einem der vorhergehenden Ansprüche umfasst.

12. Windkraftanlage (1) mit einer Gondel (2), die Gondel (2) umfassend:
- ein Gondelgehäuse (4);
- eine Rotornabe (6) mit daran angeordneten Rotorblättern;
- eine Rotorlagerung (8) zur Lagerung der Rotornabe (6) am Gondelgehäuse (4), **dadurch gekennzeichnet, dass** die Rotorlagerung (8) eine Gleitlagerung (9) nach einem der Ansprüche 1 bis 10 umfasst.

13. Verfahren zum Wechsel von Gleitlagerpads (20) in einer Gleitlagerung (9) nach einem der Ansprüche 1 bis 10, **gekennzeichnet durch** die Verfahrensschritte:
- Entfernen eines der Gleitlagerpads (20) durch axiales Herausziehen des Befestigungsprofils (21) des betreffenden Gleitlagerpads (20) aus dem Aufnahmeprofil (22) des inneren Ringelementes (13);
- Einsetzen eines neuen Gleitlagerpads (20) durch axiales Einschieben des Befestigungsprofils (21) des betreffenden Gleitlagerpads (20) in das Aufnahmeprofil (22) des inneren Ringelementes (13), wobei für jedes der Gleitlagerpads (20) ein eigenes Axialklemmelement (40) vorgesehen ist, welches mittels eines Befestigungsmittels (41) an einem inneren Ringelement (13) befestigt wird und auf eine zweite Stirnfläche (29) des Gleitlagerpads (20) einwirkt, sodass das Gleitlagerpad (20) zwischen dem Axialklemmelement (40) und einem Axialanschlag (38) geklemmt wird.

14. Verfahren zum Herstellen eines inneren Ringelementes (13) für eine Gleitlagerung (9) nach einem der Ansprüche 1 bis 10, **gekennzeichnet durch** die Verfahrensschritte:
- Vorschmieden eines Innenringrohlings (70) zur groben Formung einer Rohlingkontur (71);
- Normalglühen des Innenringrohlings (70);
- Herstellen des Aufnahmeprofils (22) durch Bearbeiten des Innenringrohlings (70) mittels zerspanender Bearbeitung.

## Claims

1. A sliding bearing (9) comprising:
- an inner ring element (13);
- an outer ring element (14);
- at least one sliding bearing element (15), which is arranged between the inner ring element (13) and the outer ring element (14),
wherein
the sliding bearing element (15) has multiple sliding bearing pads (20), wherein the individual sliding bearing pads (20) each have a radial bearing surface (23) and a fastening profile (21) located opposite the radial bearing surface (23), and wherein the inner ring element (13) has at least a receiving profile (22) on its radial outside (32), which serves the for the positive locking connection between the sliding bearing pads (20) and the inner ring element (13), wherein the fastening profile (21) of the sliding bearing pad (20) and the receiving profile (22) of the inner ring element (13) are formed such that the sliding bearing pad (20) can be inserted into the inner ring element (13) in the axial direction (37) or in the diagonal direction (72), wherein an axial stop (38) for the sliding bearing pad (20) is formed on the inner ring element (13) in the region of the receiving profile (22), wherein a releasable axial clamping element (40) for the sliding bearing pad (20) is formed on the inner ring element (13) in the region of the receiving profile (22), wherein a first end face (26) of the sliding bearing pad (20) can be placed on the axial stop (38) in the axial direction (37), and the axial clamping element (40) can be acted upon a second end face (29) of the sliding bearing pad (20), **characterized in that** for each of the sliding bearing pads (20), a separate axial clamping element (40) is provided, which is fastened to the inner ring element (13) by means of a fastening means (41) and acts on the second end face (29) of the sliding bearing pad (20), so that the sliding bearing pad (20) is clamped between the axial clamping element (40) and the axial stop (38).

2. The sliding bearing (9) according to claim 1, **characterized in that** the fastening profile (21) and the receiving profile (22) are formed as a dovetail connection.

3. The sliding bearing (9) according to one of preceding claims, **characterized in that** a clamping device (43) is arranged between the fastening profile (21) of the sliding bearing pad (20) and the receiving profile (22) of the inner ring element (13), by means of which clamping device (43) the sliding bearing pad (20) can be clamped.

4. The sliding bearing (9) according to claim 3, **characterized in that** the clamping device (43) comprises at least a first clamping wedge (59), which has a wedge surface (60), which cooperates with a first counter wedge surface (61) formed in the receiving profile (22) and tapering in the axial direction (37), wherein the first clamping wedge (59) can be displaced in the axial direction (37) by means of a first positioning means (62), in particular a thread element.

5. The sliding bearing (9) according to claim 4, **characterized in that** the clamping device (43) comprises a second clamping wedge (63), which has a wedge surface (64), which cooperates with a second counter wedge surface (65) formed in the receiving profile (22) and tapering in the axial direction (37), wherein the first counter wedge surface (61) and the second counter wedge surface (65) are formed to taper in opposite directions, wherein the second clamping wedge (63) can be displaced in the axial direction (37) by means of a second positioning means (66), in particular a thread element.

6. The sliding bearing (9) according to claim 5, **characterized in that** the first positioning means (62) and the second positioning means (66) are formed on a common positioning rod (67), wherein the first positioning means (62) has a right-handed thread and the second positioning means (66) has a left-handed thread.

7. The sliding bearing (9) according to one of the preceding claims, **characterized in that** at least a first axial bearing surface (20) is formed on the sliding bearing pad (20), which first axial bearing surface (27) is arranged at a first angle (28) of 90° relative to the radial bearing surface (23) when viewed in a longitudinal section, in particular that also a second axial bearing surface (30) is formed on the sliding bearing pad (20), which second axial bearing surface (30) is arranged at a second angle (31) of 90° relative to the radial bearing surface (23), and which is arranged opposite the first axial bearing surface (27).

8. The sliding bearing (9) according to one of the preceding claims, **characterized in that** the inner ring element (13) has multiple tilting segments (33), which are arranged so as to be distributed across the circumference, wherein the individual tilting segments (33) are arranged so as to be spaced apart from one another in the circumferential direction and can be tilted independently of one another, wherein at least one of the receiving profiles (22) is formed for each tilting segment (33).

9. The sliding bearing (9) according to claim 8, **characterized in that** the individual tilting segments (33) have a first recess (46) at least on a first front side (44) observed in the axial direction (37), in particular that the individual tilting segments (33) have a second recess (47) on a second front side (45) observed in the axial direction (37), in particular that the individual tilting segments (33) are designed to have a Z-shaped cross-section.

10. The sliding bearing (9) according to one of the preceding claims, **characterized in that** the outer ring element (14) is designed to be sleeve-shaped, wherein a first end wall (49) protruding radially inwards is formed on a first front side (48), and that a first axial bearing surface (27) of the sliding bearing pad abuts on the first end wall (49).

11. A nacelle (2) for a wind turbine (1), the nacelle (2) comprising:
- a nacelle housing (4);
- a rotor hub (6);
- a rotor bearing (8) for bearing the rotor hub (6) on the nacelle housing (4),
**characterized in that** the rotor bearing (8) comprises a sliding bearing (9) according to one of the preceding claims.

12. A wind turbine (1) having a nacelle (2), the nacelle (2) comprising:
- a nacelle housing (4);
- a rotor hub (6) with rotor blades arranged thereon;
- a rotor bearing (8) for bearing the rotor hub (6) on the nacelle housing (4),
**characterized in that** the rotor bearing (8) comprises a sliding bearing (9) according to one claims 1 to 10.

13. A method for replacing sliding bearing pads (20) in a sliding bearing (9) according to one of claims 1 to 10, **characterized by** the method steps:
- removing one of the sliding bearing pads (20) by pulling the fastening profile (21) of the relevant sliding bearing pad (20) axially out of the receiving profile (22) of the inner ring element (13);
- inserting the new sliding bearing pad (20) by pushing the fastening profile (21) of the relevant sliding bearing pad (20) axially into the receiving profile (22) of the inner ring element (13), wherein for each of the sliding bearing pads (20), a separate axial clamping element (40) is provided, which is fastened to an inner ring element (13) by means of a fastening means (41) and acts on a second end face (29) of the sliding bearing pad (20), so that the sliding bearing pad (20) is clamped between the axial clamping element (40) and the axial stop (38).

14. A method for producing an inner ring element (13) for a sliding bearing (9) according to one of claims 1 to 10, **characterized by** the method steps:
- pre-forging an inner ring blank (70) for a rough shaping of a blank contour (71);
- normalizing the inner ring blank (70);
- producing the receiving profile (22) by processing the inner ring blank (70) by means of machining.

## Revendications

1. Palier lisse (9) comprenant :
- un élément annulaire interne (13) ;
- un élément annulaire externe (14) ;
- au moins un élément de palier lisse (15) qui est disposé entre l'élément annulaire interne (13) et l'élément annulaire externe (14),
dans lequel
l'élément de palier lisse (15) comprend plusieurs patins de palier lisse (20), dans lequel les différents patins de palier lisse (20) comprennent chacun une surface de palier radiale (23) et un profilé de fixation (21) qui fait face à la surface de palier radiale (23) et dans lequel l'élément annulaire interne (13) comprend, sur sa face extérieure radiale (32), au moins un profilé de logement (22) qui permet le raccordement par complémentarité de forme des patins de palier lisse (20) avec l'élément annulaire interne (13), dans lequel le profilé de fixation (21) du patin de palier lisse (20) et le profilé de logement (22) de l'élément annulaire interne (13) sont conçus de façon à ce que la patin de palier lisse (20) puisse être inséré dans la direction axiale (37) ou dans la direction diagonale (72) dans l'élément annulaire interne (13), dans lequel, sur l'élément annulaire interne (13), au niveau du profilé de logement (22), est prévue une butée axiale (38) pour le patin de palier lisse (20), dans lequel, sur l'élément annulaire interne (13), au niveau du profilé de logement (22), est prévu un élément de serrage axial amovible (40) pour le patin de palier lisse (20), dans lequel une première face frontale (26) du patin de palier lisse (20) peut s'appuyer dans la direction axiale (37) contre la butée axiale (38) et l'élément de serrage axial (40) peut agir sur une deuxième face frontale (29) du patin de palier lisse (20), **caractérisé en ce que**, pour chacun des patins de palier lisse (20), est prévu un élément de serrage axial (40) qui est fixé à l'élément annulaire interne (13) à l'aide d'un moyen de fixation (41) et qui agit que la deuxième face frontale (29) du patin de palier lisse (20) de façon à ce que le patin de palier lisse (20) soit serré entre l'élément de serrage axial (40) et la butée axiale (38).

2. Palier lisse (9) selon la revendication 1, **caractérisé en ce que** le profilé de fixation (21) et le profilé de logement (22) sont conçus sous la forme d'une liaison à queue d'aronde.

3. Palier lisse (9) selon l'une des revendications précédentes, **caractérisé en ce que**, entre le profilé de fixation (21) du patin de palier lisse (20) et le profilé de logement (22) de l'élément annulaire interne (13), est disposé un dispositif de serrage (43) au moyen duquel le patin de palier lisse (20) peut être serré.

4. Palier lisse (9) selon la revendication 3, **caractérisé en ce que** le dispositif de serrage (43) comprend au moins une première cale de serrage (59), qui présente une surface de cale (60) qui interagit avec une première contre-surface de cale (61) réalisée dans le profilé de logement (22) et qui se rétrécit dans la direction axiale (37), dans lequel la première cale de serrage (59) peut coulisser grâce à un premier moyen de positionnement (62), plus particulièrement un élément fileté, dans la direction axiale (37).

5. Palier lisse (9) selon la revendication 4, **caractérisé en ce que** le dispositif de serrage (43) comprend une deuxième cale de serrage (63) qui présente une surface de cale (64) qui interagit avec une deuxième contre-surface de cale (65) réalisée dans le profilé de logement (22) et qui se rétrécit dans la direction axiale (37), dans lequel la première contre-surface de cale (61) et la deuxième contre-surface de cale (65) sont réalisées de façon à se rétrécir dans des directions opposées, dans lequel la deuxième cale de serrage (63) peut coulisser grâce à un deuxième moyen de positionnement (66), plus particulièrement un élément fileté, dans la direction axiale (37).

6. Palier lisse (9) selon la revendication 5, **caractérisé en ce que** le premier moyen de positionnement (62) et le deuxième moyen de positionnement (66) sont réalisés sur une tige de positionnement commune (67), dans lequel le premier moyen de positionnement (62) comprend un filetage à droite et le deuxième moyen de positionnement (66) comprend un filetage à gauche.

7. Palier lisse (9) selon l'une des revendications précédentes, **caractérisé en ce que**, sur le patin de palier lisse (20), est réalisée au moins une première surface de palier axiale (27), qui est disposée, vue en coupe longitudinale, avec un premier angle (28) de 90° par rapport à la surface de palier radiale (23), plus particulièrement **en ce que**, sur le patin de palier lisse (20), est réalisée également une deuxième surface de palier axiale (30) qui est disposée avec un deuxième angle (31) de 90° par rapport à la surface de palier radiale (23) et qui est disposée en face de la première surface de palier axiale (27).

8. Palier lisse (9) selon l'une des revendications précédentes, **caractérisé en ce que** l'élément annulaire interne (13) comprend plusieurs segments basculants (33) qui sont répartis sur la circonférence, dans lequel les différents segments basculants (33) sont disposés de manière distante entre elles dans la direction circonférentielle et peuvent basculer indépendamment les uns des autres, dans lequel, pour chaque segment basculant (33) est prévu un des profilés de logement (22).

9. Palier lisse (9) selon la revendication 8, **caractérisé en ce que** les différents segments basculants (33) présentent, vus dans la direction axiale (37), au moins sur une première face frontale (44), un premier évidement (46), plus particulièrement **en ce que** les différents segments basculants (33) présentent, vus dans la direction axiale (37), sur une deuxième face frontale (45), un deuxième évidement (47), plus particulièrement **en ce que** les différents segments basculants (33) présentent, en coupe transversale, une forme de Z.

10. Palier lisse (9) selon l'une des revendications précédentes, **caractérisé en ce que** l'élément annulaire externe (14) présente la forme d'une douille, dans lequel, sur une première face frontale (48), est réalisée une première paroi frontale (49) dépassant radialement vers l'intérieur et **en ce qu'**une première surface de palier axiale (27) du patin de palier lisse s'appuie contre la première paroi frontale (49).

11. Nacelle (2) pour une éolienne (1), cette nacelle (2) comprenant :
- un boîtier de nacelle (4) ;
- un moyeu de rotor (6) ;
- un palier de rotor (8) pour le logement du moyeu de rotor (6) au niveau du boîtier de nacelle (4), **caractérisée en ce que** le palier de rotor (8) comprend un palier lisse (9) selon l'une des revendications précédentes.

12. Éolienne (1) avec une nacelle (2), cette nacelle (2) comprenant :
- un boîtier de nacelle (4) ;
- un moyeu de rotor (6) avec des pales de rotor disposées sur celui-ci ;
- un palier de rotor (8) pour le logement du moyeu de rotor (6) au niveau du boîtier de nacelle (4), **caractérisée en ce que** le palier de rotor (8) comprend un palier lisse (9) selon l'une des revendications 1 à 10.

13. Procédé pour le changement de patins de palier lisse (20) dans un palier lisse (9) selon l'une des revendications 1 à 10, **caractérisé par** les étapes suivantes :
- retrait d'un des patins de palier lisse (20) par extraction axiale du profilé de fixation (21) du patin de palier lisse (20) concerné hors du profilé de logement (22) de l'élément annulaire interne (13) ;
- insertion d'un nouveau patin de palier lisse (20) par insertion axiale du profilé de fixation (21) du patin de palier lisse (20) concerné dans le profilé de logement (22) de l'élément annulaire interne (13), dans lequel, pour chacun des patins de palier lisse (20), est prévu un élément de serrage axial (40), qui est fixé à l'aide d'un moyen de fixation (41) à un élément annulaire interne (13) et qui agit sur une deuxième face frontale (29) du patin de palier lisse (20), de façon à ce que le patin de palier lisse (20) soit serré entre l'élément de serrage axial (40) et une butée axiale (38).

14. Procédé de fabrication d'un élément annulaire interne (13) pour un palier lisse (9) selon l'une des revendications 1 à 10, **caractérisé par** les étapes suivantes :
- pré-forgeage d'une ébauche annulaire interne (70) afin de former grossièrement un contour d'ébauche (71) ;
- recuit de normalisation de l'ébauche annulaire interne (70) ;
- fabrication du profilé de logement (22) par usinage de l'ébauche annulaire interne (70) au moyen d'un usinage par enlèvement de copeaux.
